# FASCICULE DE BREVET EUROPEEN

(11) **EP 0 990 509 B1**
(45) Date de publication et mention de la délivrance du brevet: **02.05.2002**
(21) Numéro de dépôt: 99402388.5
(22) Date de dépôt: 30.09.1999
(51) Int. Cl.: B29D 11/00, G02B 6/18

(54) **Fibre optique plastique à gradient d'indice et procédé de fabrication en continu d'une fibre optique plastique à gradient d'indice**
Optische Faser aus Kunststoff mit Gradientindex und deren kontinuierliches Herstellungsverfahren
Graded index plastic optical fiber and process of continuous fabrication thereof

(30) Priorité: 01.10.1998 FR 9812288
(43) Date de publication de la demande: 05.04.2000
(73) Titulaire: Nexans, 75008 Paris (FR)
(72) Inventeur: Barraud, Jean-Yves, 75010 Paris (FR); Morichere, Dominique, 75005 Paris (FR); Pastouret, Alain, 91120 Palaiseau (FR); Boutevin, Bernard, 34000 Montpellier (FR); Rousseau, Alain, 34090 Montpellier (FR)
(74) Mandataire: Feray, Valérie

(56) Documents cités:
- EP-A- 0 256 765
- EP-A- 0 425 305
- EP-A- 0 488 390
- PATENT ABSTRACTS OF JAPAN vol. 097, no. 009, 30 septembre 1997 (1997-09-30) & JP 09 138313 A (SUMITOMO WIRING SYST LTD), 27 mai 1997 (1997-05-27)

## Description

La présente invention concerne une fibre optique plastique à gradient d'indice et un procédé de fabrication en continu d'une fibre optique plastique à gradient d'indice.

Les fibres optiques plastique à gradient d'indice, utilisables dons une gamme spectrale allant de préférence jusqu'au proche infrarouge, sont intéressantes en ce qu'elles peuvent être appliquées aux réseaux d'accès large bande. A ce jour, de telles fibres ne sont pas encore commercialisées, bien que depuis une quinzaine d'années l'intérêt des recherches sur le sujet n'a pas cessé de croître. Différentes approches de recherche ont été mises au point, et les fibres correspondantes ont été synthétisées à titre expérimental. Les fibres constituées de polyméthacrylate ne sont pas utilisables dans la gamme spectrale envisagée, car la présence de nombreuses liaisons C-H limite l'application au domaine spectral du visible de longueur d'onde inférieure à 800 nm. De plus, la température d'utilisation est inférieure à 80°C. Un domaine qui avait été jugé plus prometteur est celui des fibres constituées essentiellement de polymères perfluorés, mais aucun matériau commercial, pour cette application spécifique, n'existe à ce jour. D'autres voies de recherches mixtes existent.

Ainsi, le document WO-A-97/36.196 décrit une fibre optique plastique à gradient d'indice (appelée FOP à GI) en multicouche dont l'indice de réfraction au centre est plus haut et diminue progressivement vers la périphérie, cette fibre ayant plusieurs couches stratifiées sous forme coaxiale avec des (co)polymères choisis dans un groupe composé des homopolymères HP1, HP2, ..., HPn d'au moins deux monomères M1, M2, ..., Mn et d'au moins un copolymère CP des monomères Mn, des couches mélangées de deux (co)polymères voisines se trouvant chacune entre les couches. Ledit brevet décrit deux méthodes de préparation de la FOP à GI. Une des méthodes consiste à préparer des matières d'enfilage qui sont composées des (co)polymères, à les extruder à l'aide d'une buse à multiorifices coaxiaux, et à laisser diffuser les couches entre elles. Cette technique basée sur le dépôt de polymères préalablement fondus ne garantit pas l'homogénéité des épaisseurs de couches ni la reproductibilité de l'interdiffusion. L'autre méthode consiste à préparer des matières d'enfilage qui sont composées des (co)polymères et de monomères Mn, à les extruder au moyen d'une buse à multiorifices coaxiaux, à laisser diffuser les couches entre elles, puis à photopolymériser les monomères. Il est mentionné également que, pour la préparation des (co)polymères, il est possible de polymériser partiellement, par exemple jusqu'à un degré de polymérisation d'au moins 50%, et de poursuivre la réaction par photopolymérisation. Une telle opération, consistant à arrêter la polymérisation en cours, n'est par essence pas reproductible. Finalement la FOP à GI obtenue consiste en couches de résines constituées de polymères à forte masse moléculaire, qui ont interdiffusé. Aucune réaction de réticulation par photopolymérisation n'est mentionnée par cette méthode. Les polymères ne sont donc pas liés entre eux chimiquement, ce qui entraîne une instabilité du profil d'indice de réfraction, en durée et en température.

D'autre part, la demande de brevet JP-A-09.138.313 divulgue une méthode de fabrication de FOP à GI, par application d'une solution obtenue en diluant un polymère avec un composé à bas indice de réfraction dans un monomère, autour d'une âme en plastique dont l'indice est le plus élevé. La polymérisation dudit monomère constitue la première couche de polymère d'indice de réfraction plus bas que celui de l'âme. De la même manière on dépose différentes couches, dont l'indice de réfraction diminue progressivement du centre vers la périphérie. Dans l'exemple, la viscosité des solutions appliquées sur l'âme a été ajustée entre 5000 à 10000 poises soit entre 500 et 1000 Pa.s. Pour la mise en oeuvre de l'invention, le composé à bas indice de réfraction n'est pas polymérisable. On observe donc une instabilité du profil d'indice de réfraction en durée et en température.

La fibre optique plastique selon l'invention est telle que le profil d'indice de réfraction est stable en durée et en température. En effet, un réseau tridimensionnel fixe est créé par réticulation au cours de la fabrication de la fibre. D'autre part, en ce qui concerne le procédé de fabrication d'une fibre optique plastique selon l'invention, le choix de la viscosité des différents mélanges permet de les déposer, sans fusion, de façon coaxiale. Par suite ledit procédé a une bonne reproductibilité, principalement en termes d'épaisseur de couches et d'interdiffusion, et donc de profil d'indice de réfraction.

L'invention concerne aussi deux procédés de fibrage direct, adapté au dépôt des mélanges spécifiques de polymères, dont l'indice de réfraction varie en fonction de la teneur en fluor.

La présente invention concerne une fibre optique plastique à gradient d'indice, l'indice de réfraction étant plus important au centre et diminuant progressivement jusqu'à la périphérie, ladite fibre étant constituée d'un réseau réticulé sensiblement homogène et amorphe à partir d'un matériau à base de polymères et de monomères au moins partiellement fluorés.

L'invention concerne aussi un procédé de fabrication en continu d'une fibre optique plastique à gradient d'indice, l'indice de réfraction étant plus important au centre et diminuant progressivement jusqu'à la périphérie, ladite fibre ayant plusieurs couches de résines déposées sous forme coaxiale, ledit procédé comprenant
- la préparation d'au moins deux mélanges amorphes comprenant chacun au moins un amorceur, au moins un polymère P au moins partiellement fluoré comprenant de 10 à 1000, de préférence de 20 à 100, unités monomères, ledit polymère comprenant une chaîne principale et moins deux groupements réactifs, généralement en position latérale et/ou terminale de la chaîne principale, et un diluant réactif comprenant au moins deux monomères M1 et M2 d'indices de réfraction différents, chaque monomère étant au moins partiellement fluoré et comportant un groupe réactif susceptible de réagir avec un groupement réactif du polymère P, la proportion en pourcentage poids dudit polymère P par rapport aux constituants du mélange étant pratiquement constante pour chaque mélange et la proportion en pourcentage massique de M1 par rapport à la somme des monomères du diluant réactif variant sensiblement d'un mélange à l'autre,
- le filage du premier mélange à plus haut indice de réfraction de façon à constituer l'âme,
- le dépôt sur ladite âme de couche(s) de mélange(s) d'indice de réfraction décroissant,
- l'interdiffusion de chaque couche avec la (ou les) couche(s) voisine(s), et
- la réticulation du polymère P et des monomères du diluant réactif.

De préférence la réticulation est une photoréticulation et l'amorceur est un photoamorceur.

Selon une variante du procédé selon l'invention, la chaîne principale du polymère P est choisie dans le groupe formé par les poly(méth)acrylates au moins partiellement fluorés, auxquels peuvent être éventuellement incorporés au moins un monomère de type maléimide au moins partiellement fluoré. Selon une seconde variante du procédé selon l'invention, la chaîne principale du polymère P est choisie dans le groupe formé par les polyéthers au moins partiellement fluorés.

Un des modes de réalisation du procédé selon l'invention est tel que les groupements réactifs dudit polymère P sont au moins partiellement fluorés ou chlorés et de type acrylates, méthacrylates ou vinyl éthers. Un tel mode de réalisation inclut aussi les dérivés de ces groupements réactifs tels des dérivés des vinyl éthers comme les propynyléthers.

L'invention concerne enfin un autre procédé de fabrication en continu d'une fibre optique plastique à gradient d'indice, l'indice de réfraction étant plus important au centre et diminuant progressivement jusqu'à la périphérie, ladite fibre ayant plusieurs couches de résines déposées sous forme coaxiale, ledit procédé comprenant
- la préparation d'au moins deux mélanges amorphes comprenant chacun au moins un amorceur, au moins un polymère P au moins partiellement fluoré comprenant de 10 à 1000 unités monomères, et un diluant réactif comprenant au moins deux monomères M1 et M2 d'indices de réfraction différents, chaque monomère étant au moins partiellement fluoré et au moins un des deux monomères M1 ou M2 comportant au moins deux groupements réactifs susceptibles de réagir avec un groupement réactif d'un des deux monomères M1 ou M2, l'autre des deux monomères M1 ou M2 comportant au moins un groupement réactif susceptible de réagir avec un groupement réactif d'un des deux monomères M1 ou M2, la proportion en pourcentage poids dudit polymère P par rapport à la somme des constituants du mélange étant pratiquement constante pour chaque mélange et la proportion en pourcentage massique de M1 par rapport à la somme des monomères du diluant réactif variant sensiblement d'un mélange à l'autre,
- le filage du premier mélange à plus haut indice de réfraction de façon à constituer l'âme,
- le dépôt sur ladite âme de couche(s) d'indice de réfraction décroissant,
- l'interdiffusion de chaque couche avec la (ou les) couche(s) voisine(s), et
- la réticulation du polymère P et des monomères du diluant réactif.

Un des modes de réalisation du procédé selon l'invention est tel que les monomères du diluant réactif sont choisis dans la famille des α fluoro ou α, β difluoro acrylates ou méthacrylates d'alkyle, le terme alkyle désignant tout groupement hydrocarboné au moins partiellement chloré ou fluoré, et parmi les vinyl éthers au moins partiellement chlorés ou fluorés.
Selon une variante des procédés selon l'invention, le polymère P est préparé par polymérisation radicalaire contrôlant l'homogénéité des masses moléculaires. Par exemple, le polymère P est préparé à partir d'au moins un monomère PM, en présence d'un agent de transfert et d'au moins un amorceur thermique. Dans ce cas, le monomère PM est de préférence choisi dans la famille des α fluoro ou α, β difluoro (méth)acrylates d'alkyle, le terme alkyle désignant tout groupement hydrocarboné au moins partiellement chloré ou fluoré, et des maléimides au moins partiellement fluorés.

Les procédés selon l'invention sont de préférence tel que le dépôt des couches est successif. Une variante des procédés selon l'invention est alors telle que l'on procède au moins partiellement à une réticulation intermédiaire entre chaque dépôt de couche de mélange. Une autre variante des procédés selon l'invention consiste à procéder au dépôt successif des couches puis à une seule réticulation.

De préférence, le comportement chimique est pratiquement semblable. Par suite, la variation de la composition des mélanges en monomères du diluant réactif, permettant principalement de moduler l'indice de réfraction en fonction de la teneur en fluor, n'influence pas de façon significative la viscosité, la réactivité et la stabilité thermique des mélanges.

La fibre optique plastique selon l'invention a l'avantage d'être utilisable dans une gamme spectrale allant jusqu'au proche infrarouge, tout en possédant une faible atténuation, de quelques dizaines de dB/km sur l'ensemble de la gamme.

Un autre des avantages de la fibre optique selon l'invention est de pouvoir être utilisée, à des températures élevées par rapport aux températures d'utilisation des fibres optiques plastiques de l'art antérieur, jusqu'à au moins 125°C, grâce à sa nature réticulée.

La fibre ainsi obtenue possède un profil d'indice de réfraction de type gradient d'indice pratiquement lissé, dont la variation d'indice de réfraction entre le centre et la périphérie de la fibre est généralement compris entre 0,01 et 0,03. Le diamètre de la fibre ainsi obtenue est généralement compris entre 300 µm et 1 mm.

Les exemples qui suivent illustrent l'invention, sans toutefois en limiter la portée.

### Exemples

### Exemple 1 : fabrication d'un polymère réactif de type poly (α fluoro) (méth)acrylate.

On fabrique un polymère photoréactif de formule suivante: 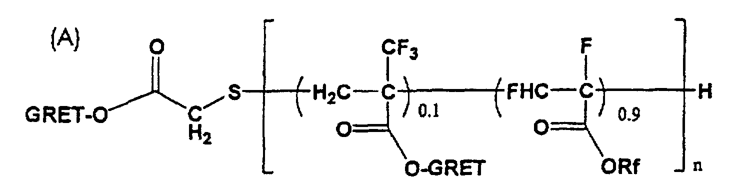 où GRET représente le groupement photoréticulable :
-CH₂-CH(OH)-CH₂-O-CO-C(CH₃)=CH₂, et où Rf représente le groupement CH(CF₃)₂, servant à ajuster l'indice de réfraction.

Pour cela, on synthétise tout d'abord un polymère précurseur, puis on introduit les groupements photoréactifs sur le polymère précurseur.

Pour la synthèse du polymère précurseur, on dispose des matières premières suivantes : deux monomères, l'α,β-difluoroacrylate d'hexafluoroisopropyle et l'acide α-trifluorométhyle acrylique, l'agent de transfert étant l'acide thioglycolique et l'amorceur étant l'acide 4,4'-azobis (4-cyano) pentanoïque ou ACPA, en quantité d'une mole d'agent de transfert pour 20 moles de monomères et de 0,2 mole de amorceur pour 20 moles de monomères. La copolymérisation est amorcée de façon thermique, à une température d'environ 60°C. Selon une variante il est possible d'utiliser un autre amorceur, et dans ce cas la température, qui dépend de la nature du amorceur, est généralement comprise entre 60 et 120°C. Dans le cas du présent exemple, la copolymérisation radicalaire est effectuée en masse. Selon une variante elle peut également être effectuée en présence d'un solvant.

On obtient donc finalement un polymère précurseur comprenant 20 unités monomères. Le polymère (A) est obtenu en faisant réagir trois moles de méthacrylate de glycidyle sur une mole dudit polymère en présence d'un catalyseur à base de chrome, le Chrome DIPS (diisopropylesalicylate). Le polymère (A) ainsi obtenu comporte trois groupements réactifs, de type méthacrylate.

### Exemple 2 : fabrication des mélanges à partir du polymère réactif de type poly (α fluoro) (méth)acrylate (A) de l'exemple 1.

On fabrique quatre mélanges différents, comportant un photoamorceur commercial, l'IRGACURE 651, le polymère réactif de formule (A) de l'exemple 1, et un diluant réactif composé de deux monomères en proportions différentes selon le mélange, les deux monomères étant (a) l'α-fluoroacrylate d'hexafluoroisopropyle, dont l'homopolymère à 20°C a un indice de réfraction égal à 1,3502 et (b) l'α,β-difluoroacrylate de trichloroéthyle, dont l'homopolymère à 20°C a un indice de réfraction égal à 1,5063. Selon une variante, on peut utiliser tout autre photoamorceur de la famille des IRGACURE. Le tableau 1 résume les différentes compositions et propriétés des mélanges, les quantités étant calculées pour 700 grammes de mélange :

**Tableau 1**

| Mélange n° | Quantité de (a) (en grammes) | Quantité de (b) (en grammes) | Quantité du polymère réactif (en grammes) | Viscosité du mélange (en Pa.s à 20°C) | Indice de réfraction du mélange à 20°C |
|---|---|---|---|---|---|
| 1 | 35 | 315 | 350 | 8,2 | 1,4271 |
| 2 | 70 | 280 | 350 | 7,8 | 1,4193 |
| 3 | 105 | 245 | 350 | 7,2 | 1,4115 |
| 4 | 140 | 210 | 350 | 6,9 | 1,4037 |

On voit donc que le rapport, en % poids, du polymère sur la somme des constituants du mélange est constante, tandis qu'au sein du diluant réactif la proportion relative, en % massique, de M1 par rapport à la somme de M1 et M2 varie d'un mélange à l'autre. Ceci permet astucieusement de contrôler la viscosité des différents mélanges tout en faisant varier l'indice de réfraction de chacun de ces mélanges.

### Exemple 3 : fabrication d'une fibre optique plastique à gradient d'indice à partir des mélanges de l'exemple 2, réalisés à partir du polymère réactif de type poly (α fluoro) (méth)acrylate (A) de l'exemple 1.

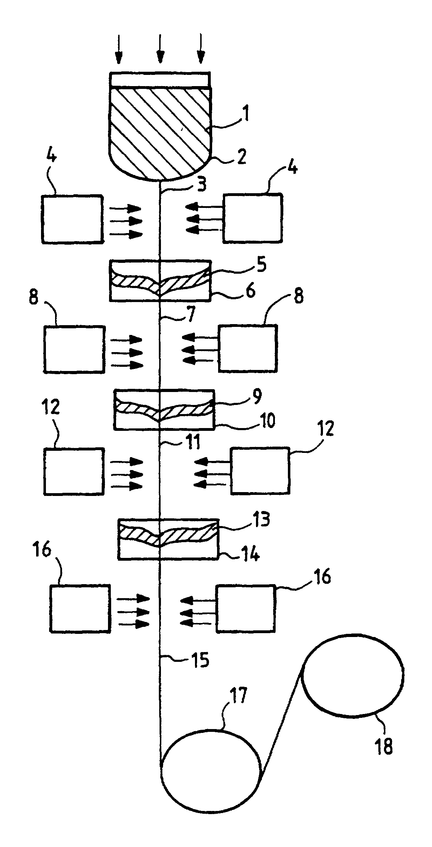

Le procédé de fabrication de ladite fibre optique plastique selon l'invention est illustré par la figure. Cette figure représente de façon très schématique le procédé de fabrication de la fibre optique, à partir de quatre mélanges de viscosité donnée.

On a d'abord procédé à la préparation de quatre mélanges amorphes, 1, 5, 9 et 13, de viscosités contrôlées et d'indices de réfraction respectivement décroissants, selon l'exemple 2.

Dans la figure, le mélange 1 amorphe de viscosité contrôlée est placé dans un réservoir 2. Le réservoir 2 est sous pression afin d'en contrôler le débit. On procède ainsi au filage du mélange 1 en une âme 3 de diamètre défini, ici égal à 100 µm. Puis l'âme 3 est irradiée par passage dans un caisson d'irradiations à lampe U.V. 4, de forme cylindrique autour de l'âme 3. Selon une variante, on peut utiliser un dispositif de type laser à excimère à la place d'un dispositif à lampe U.V. Dans tous les cas, on procède alors successivement au dépôt des trois mélanges 5, 9 et 13, chacun d'épaisseur égale à 100 µm. Chacun des mélanges 5, 9 et 13 est successivement déposé sous pression lors du passage de la fibre obtenue précédemment, respectivement 3, 7 et 11, dans le réservoir correspondant 6, 10 et 14. Chaque dépôt est suivi d'une réticulation par passage respectivement dans un caisson 8, 12 et 16. Un durcissement partiel est réalisé par irradiation U.V. dans les caissons 4, 8 et 12, ce qui permet l'interdiffusion entre les couches. Un durcissement total est réalisé par irradiation U.V. dans le caisson 16, qui permet de fixer l'ensemble de la composition constituant une fibre finale 15. Finalement on obtient la fibre optique plastique à gradient d'indice, 15, qui, au moyen du cabestan 17, est enroulée sur une bobine 18.

La fibre 15 ainsi obtenue est composée de résines constituant un matériau, figé dans son ensemble par réticulation du polymère et des deux monomères constituant le diluant réactif, en présence d'un amorceur. Toutes les fonctions acrylates ont été consommées pour donner un réseau polymère réticulé dans lequel il n'existe sensiblement plus de mobilité possible entre les chaînes polymères. On a donc réussi à obtenir un matériau stable en durée et en température, en particulier au regard de son profil d'indice de réfraction.

Ledit profil d'indice de réfraction de la fibre 15 ainsi obtenue est de type gradient d'indice, pratiquement lissé, la variation de différence d'indice de réfraction entre le centre et la périphérie de la fibre étant d'environ 0,024. Le diamètre de la fibre ainsi obtenue est de l'ordre de 330 µm.

Bien entendu la fibre optique plastique selon l'invention ne se limite pas à la représentation décrite ci-dessus. Par exemple il peut être prévu selon une variante de procéder au dépôt d'au moins un revêtement d'une résine sur la fibre optique obtenue précédemment, afin de la protéger du milieu extérieur et d'augmenter sa résistance mécanique.

### Exemple 4 : fabrication de polymères réactifs (B) de type polyéthers fluorés.

On dispose, en tant que polymères précurseurs de polymères réactifs, de différents polymères de type polyéthers fluorés, diols, comportant un nombre d'unités monomères égal à m, m étant compris selon l'invention entre 10 et 1000, de préférence entre 20 et 100, et dont la structure générale de la chaîne est :
- -(-OCF₂-CF₂-)ₓ-(-OCF₂-)_{y}-, avec x+y=m. C'est un produit commercial, le FOMBLIN Z, vendu par la Société Ausimont;
- -(-OCF₂-CF(CF₃)-)ₘ-. C'est un produit commercial, le KRYTOX, vendu par la Société Du Pont de Nemours;
- -(-OCF₂-CF₂-CF₂-)ₘ-. C'est un produit commercial, le DEMNUM, vendu par la Société Daikin;
- -(-OCF₂-CF₂-CH₂-)ₘ-. C'est un produit commercial, le DEMNUM H, vendu par la Société Daikin.

Différents polymères (B) sont alors obtenus en faisant réagir deux moles de chlorure de méthacryloyle sur une mole d'un des polymères précurseurs précédents. Selon une variante, on obtient un résultat sensiblement identique par réaction de transestérification de méthacrylate de méthyle en présence d'un catalyseur tel que l'acétylacétonate de zirconium. Les polymères (B) ainsi obtenus comportent deux groupements réactifs, de type acrylate.

### Exemple 5 : fabrication d'une fibre optique plastique à gradient d'indice à partir de mélanges réalisés à partir des polymères réactifs de type polyéthers fluorés (B) de l'exemple 4.

Pour chaque polymère (B), quatre mélanges sont réalisés selon l'exemple 2, puis une fibre optique plastique est fabriquée, de la même façon que dans l'exemple 3.

On obtient ainsi différentes fibres optiques plastique selon l'invention.

## Revendications

1. Fibre optique plastique à gradient d'indice, l'indice de réfraction étant plus important au centre et diminuant progressivement jusqu'à la périphérie, ladite fibre étant constituée d'un réseau réticulé sensiblement homogène et amorphe à partir d'un matériau à base de polymères et de monomères au moins partiellement fluorés.

2. Procédé de fabrication en continu d'une fibre optique plastique à gradient d'indice, l'indice de réfraction étant plus important au centre et diminuant progressivement jusqu'à la périphérie, ladite fibre ayant plusieurs couches de résines déposées sous forme coaxiale, ledit procédé comprenant
• la préparation d'au moins deux mélanges amorphes comprenant chacun au moins un amorceur, au moins un polymère P au moins partiellement fluoré comprenant de 10 à 1000 unités monomères, ledit polymère comprenant une chaîne principale et au moins deux groupements réactifs, et un diluant réactif comprenant au moins deux monomères M1 et M2 d'indices de réfraction différents, chaque monomère étant au moins partiellement fluoré et comportant un groupe réactif susceptible de réagir avec un groupement réactif du polymère P, la proportion en pourcentage poids dudit polymère P par rapport à la somme des constituants du mélange étant pratiquement constante pour chaque mélange et la proportion en pourcentage massique de M1 par rapport à la somme des monomères du diluant réactif variant sensiblement d'un mélange à l'autre,
• le filage du premier mélange à plus haut indice de réfraction de façon à constituer l'âme,
• le dépôt sur ladite âme de couche(s) d'indice de réfraction décroissant,
• l'interdiffusion de chaque couche avec la (ou les) couche(s) voisine(s), et
• la réticulation du polymère P et des monomères du diluant réactif.

3. Procédé selon la revendication 2 tel que la chaîne principale du polymère P est choisie dans le groupe formé par les poly(méth)acrylates au moins partiellement fluorés.

4. Procédé selon la revendication 3 tel que ladite chaîne incorpore au moins un monomère de type maléimide au moins partiellement fluoré.

5. Procédé selon la revendication 2 tel que la chaîne principale du polymère P est choisie dans le groupe formé par les polyéthers au moins partiellement fluorés.

6. Procédé selon l'une des revendications 2 à 5 tel que les groupements réactifs dudit polymère P sont au moins partiellement fluorés ou chlorés et de type acrylates, méthacrylates ou vinyl éthers.

7. Procédé de fabrication en continu d'une fibre optique plastique à gradient d'indice, l'indice de réfraction étant plus important au centre et diminuant progressivement jusqu'à la périphérie, ladite fibre ayant plusieurs couches de résines déposées sous forme coaxiale, ledit procédé comprenant
• la préparation d'au moins deux mélanges amorphes comprenant chacun au moins un amorceur, au moins un polymère P au moins partiellement fluoré comprenant de 10 à 1000 unités monomères, et un diluant réactif comprenant au moins deux monomères M1 et M2 d'indices de réfraction différents, chaque monomère étant au moins partiellement fluoré et au moins un des deux monomères M1 ou M2 comportant au moins deux groupements réactifs susceptibles de réagir avec un groupement réactif d'un des deux monomères M1 ou M2, l'autre des deux monomères M1 ou M2 comportant au moins un groupement réactif susceptible de réagir avec un groupement réactif d'un des deux monomères M1 ou M2, la proportion en pourcentage poids dudit polymère P par rapport à la somme des constituants du mélange étant pratiquement constante pour chaque mélange et la proportion en pourcentage massique de M1 par rapport à la somme des monomères du diluant réactif variant sensiblement d'un mélange à l'autre,
• le filage du premier mélange à plus haut indice de réfraction de façon à constituer l'âme,
• le dépôt sur ladite âme de couche(s) d'indice de réfraction décroissant,
• l'interdiffusion de chaque couche avec la (ou les) couche(s) voisine(s), et
• la réticulation du polymère P et des monomères du diluant réactif.

8. Procédé selon l'une des revendications 2 à 7 tel que les monomères du diluant réactif sont choisis dans la famille des a fluoro ou α, β difluoro acrylates ou méthacrylates d'alkyle, le terme alkyle désignant tout groupement hydrocarboné au moins partiellement chloré ou fluoré, et parmi les vinyl éthers au moins partiellement chlorés ou fluorés.

9. Procédé selon l'une des revendications 2 à 8 tel que le polymère P est préparé par polymérisation radicalaire contrôlant l'homogénéité des masses.

10. Procédé selon la revendication 9 tel que le polymère P est préparé à partir d'au moins un monomère PM, en présence d'un agent de transfert et d'au moins un amorceur thermique.

11. Procédé selon la revendication 10 tel que le monomère PM est choisi dans la famille des α fluoro ou α, β difluoro (méth)acrylates d'alkyle, le terme alkyle désignant tout groupement hydrocarboné au moins partiellement chloré ou fluoré, et des maléimides au moins partiellement fluorés.

12. Procédé selon l'une des revendications 2 à 11 tel que le dépôt des couches est successif.

13. Procédé selon la revendication 12 tel que l'on procède au moins partiellement à une réticulation intermédiaire entre chaque dépôt de couche de mélange.

14. Procédé selon la revendication 12 tel que l'on procède à une seule réticulation après le dépôt successif de couches.

15. Procédé selon l'une des revendications 2 à 14 tel que la réticulation est une photoréticulation et que l'amorceur présent dans chaque mélange est un photoamorceur.

## Claims

1. A graded index plastics optical fiber in which the refractive index is highest at the center and decreases progressively towards the periphery, said fiber having a substantially homogeneous and amorphous crosslinked structure made up of a material based on monomers and polymers that are at least partly fluorinated.

2. A method of continuous fabrication of a graded index plastics optical fiber in which the refractive index is highest in the center and decreases progressively towards the periphery, said fiber having a plurality of layers of resins deposited concentrically, said method comprising:
• preparing at least two amorphous mixtures each comprising at least one primer, at least one at least partly fluorinated polymer P comprising from 10 to 1000 monomer units, said polymer comprising a main chain and at least two reactive groups, and a reactive diluting agent comprising at least two monomers M1 and M2 with different refractive indeces, each monomer being at least partly fluorinated and including a reactive group adapted to react with a reactive group of the polymer P, the proportion as a percentage by weight of said polymer P relative to the sum of the components of the mixture being practically constant for each mixture and the proportion as a percentage by weight of M1 relative to the sum of monomers of the reactive diluting agent varying significantly from one mixture to another,
• extruding the first mixture with the highest refractive index to constitute the core,
• depositing layer(s) of respective decreasing refractive indeces on said core,
• interdiffusing each layer with the adjoining layer(s), and
• crosslinking the polymer P and the monomers of the reactive diluting agent.

3. A method according to claim 2, wherein the main chain of the polymer P is selected from the group comprising at least partly fluorinated poly(meth)acrylates.

4. A method according to claim 3, wherein said chain incorporates at least one at least partly fluorinated maleimide type monomer.

5. A method according to claim 2, wherein the main chain of the polymer P is selected from the group comprising at least partly fluorinated polyethers.

6. A method according to any of claims 2 to 5, wherein the reactive groups of said polymer P are at least partly fluorinated or chlorinated and of the acrylate, methacrylate or vinyl ether type.

7. A method of continuously fabricating a graded index plastics optical fiber in which the refractive index is highest in the center and decreases progressively towards the periphery, said fiber having a plurality of layers of resins deposited concentrically, said method comprising:
• preparing at least two amorphous mixtures each comprising at least one primer, at least one at least partly fluorinated polymer P comprising from 10 to 1000 monomer units and a reactive diluting agent comprising at least two monomers M1 and M2 with different refractive indeces, each monomer being at least partly fluorinated and at least one of the two monomers M1 and/or M2 including at least two reactive groups adapted to react with a reactive group of one of the two monomers M1 or M2, the other of the two monomers M1 or M2 including at least one reactive group adapted to react with a reactive group of one of the two monomers M1 or M2, the proportion as a percentage by weight of said polymer P relative to the sum of the components of the mixture being practically constant for each mixture and the proportion as a percentage by weight of M1 relative to the sum of monomers of the reactive diluting agent varying significantly from one mixture to another,
• extruding the first mixture with the highest refractive index to constitute the core,
• depositing layer(s) of respective decreasing refractive indeces on said core,
• interdiffusing each layer with the adjoining layer(s), and
• crosslinking the polymer P and the monomers of the reactive diluting agent.

8. A method according to any of claims 2 to 7, wherein the monomers of the reactive diluting agent are chosen from the family of alkyl α fluoro or α,β difluoro acrylates or methacrylates, the term "alkyl" designating any at least partly chlorinated or fluorinated hydrocarbon group, and from at least partly chlorinated or fluorinated vinyl ethers.

9. A method according to any of claims 2 to 8, wherein the polymer P is prepared by radical polymerization and by controlling the homogeneity of the masses.

10. A method according to claim 9, wherein the polymer P is prepared from at least one monomer PM in the presence of a transfer agent and at least one thermal primer.

11. A method according to claim 10, wherein the monomer PM is selected from the family of alkyl α fluoro or *α*,β difluoro (meth)acrylates, the term "alkyl" designating any at least partly chlorinated or fluorinated hydrocarbon group, and from at least partly fluorinated maleimides.

12. A method according to any of claims 2 to 11, wherein the layers are deposited successively.

13. A method according to claim 12, wherein at least partial intermediate crosslinking is performed between depositing each layer of mixture.

14. A method according to claim 12, wherein a single crosslinking is performed after the successive deposition of layers.

15. A method according to any of claims 2 to 14, wherein the crosslinking process is a photocrosslinking process and the primer in each mixture is a photoprimer.

## Patentansprüche

1. Plastische optische Faser mit Gradientenindex, deren Brechungsindex in der Mitte am größten ist und zum Umfang hin beständig abnimmt, wobei die Faser aus einem im wesentlichen homogenen und amorphen, netzartigen Geflecht eines Materials auf der Grundlage wenigstens teilweise fluorierter Polymere und Monomere gebildet ist.

2. Verfahren zur kontinuierlichen Herstellung einer plastischen optischen Faser mit Gradientenindex, deren Brechungsindex in der Mitte am größten ist und zum Umfang hin beständig abnimmt, wobei die Faser mehrere in koaxialer Form abgeschiedene Lagen aus Harz aufweist, welches Verfahren umfasst:
• Herstellen von wenigstens zwei amorphen Mischungen, welche jeweils wenigstens einen Initiator, wenigstens ein wenigstens teilweise fluoriertes Polymer P mit 10 bis 1000 Monomereinheiten, wobei das Polymer eine Hauptkette und wenigstens zwei reaktive Gruppen aufweist, und ein reaktives Verdünnungsmittel mit wenigstens zwei Monomeren M1 und M2 mit unterschiedlichen Brechungsindizes, wobei jedes Monomer wenigstens teilweise fluoriert ist und eine reaktive Gruppe hat, welche geeignet ist mit einer reaktiven Gruppe des Polymers P zu reagieren, umfassen, wobei der Anteil in Gewichtsprozent des Polymers P in Bezug auf die Summe der Bestandteile der Mischung für jede Mischung praktisch konstant ist, und der Anteil in Massenprozent von M1 in Bezug auf die Summe der Monomere des reaktiven Verdünnungsmittels von einer Mischung zur anderen deutlich variiert,
• Faserziehen der ersten Mischung mit höchstem Brechungsindex um so die Seele zu bilden,
• Abscheiden der Lage(n) mit fallendem Brechungsindex auf die Seele,
• Zwischendiffusion jeder Lage mit der (oder den) benachbarten Lage(n), und
• Vernetzung des Polymers P und der Monomere des reaktiven Verdünnungsmittels.

3. Verfahren nach Anspruch 2, bei welchem die Hauptkette des Polymers P aus der Gruppe, welche aus den wenigstens teilweise fluorierten Poly(meth-)acrylaten besteht, gewählt ist.

4. Verfahren nach Anspruch 3, bei welchem die Hauptkette wenigstens ein wenigstens teilweise fluoriertes Monomer vom Typ Maleimid enthält.

5. Verfahren nach Anspruch 2, bei welchem die Hauptkette des Polymers P aus der Gruppe, welche aus den wenigstens teilweise fluorierten Polyethern besteht, gewählt ist.

6. Verfahren nach einem der Ansprüche 2 bis 5, bei welchem die reaktiven Gruppen des Polymers P wenigstens teilweise fluoriert oder chloriert sind und vom Typ der Acrylate, Methacrylate oder Vinylether sind.

7. Verfahren zur kontinuierlichen Herstellung einer plastischen optischen Faser mit Gradientenindex, deren Brechungsindex in der Mitte am größten ist und zum Umfang hin beständig abnimmt, wobei die Faser mehrere in koaxialer Form abgeschiedene Lagen aus Harz aufweist, welches Verfahren umfasst:
• Herstellen von wenigstens zwei amorphen Mischungen, welche jeweils wenigstens einen Initiator, wenigstens ein wenigstens teilweise fluoriertes Polymer P mit 10 bis 1000 Monomereinheiten, und ein reaktives Verdünnungsmittel mit wenigstens zwei Monomeren M1 und M2 mit unterschiedlichen Brechungsindizes, wobei jedes Monomer wenigstens teilweise fluoriert ist und wenigstens eines der beiden Monomere M1 oder M2 wenigstens zwei reaktive Gruppe hat, welche geeignet sind mit einer reaktiven Gruppe von einem der beiden Monomere M1 oder M2 zu reagieren, und das andere der beiden Monomere M1 oder M2 wenigstens eine reaktive Gruppe hat, welche geeignet ist mit einer reaktiven Gruppe von einem der beiden Monomere M1 oder M2 zu reagieren, umfassen, wobei der Anteil in Gewichtsprozent des Polymers P in Bezug auf die Summe der Bestandteile der Mischung für jede Mischung praktisch konstant ist, und der Anteil in Massenprozent von M1 in Bezug auf die Summe der Monomere des reaktiven Verdünnungsmittels von einer Mischung zur anderen deutlich variiert,
• Faserziehen der ersten Mischung mit höchstem Brechungsindex um so die Seele zu bilden,
• Abscheiden der Lage(n) mit fallendem Brechungsindex auf die Seele,
• Zwischendiffusion jeder Lage mit der (oder den) benachbarten Lage(n), und
• Vernetzung des Polymers P und der Monomere des reaktiven Verdünnungsmittels.

8. Verfahren nach einem der Ansprüche 2 bis 7, bei welchem die Monomere des reaktiven Verdünnungsmittels aus der Familie der á-Fluor- oder ä, â-Difluor-Alkylacrylate oder Alkylmethacrylate, wobei der Ausdruck Alkyl jede wenigstens teilweise chlorierte oder fluorierte Kohlenwasserstoffgruppe bezeichnet, und aus den wenigstens teilweise chlorierten oder fluorierten Vinylethern gewählt sind.

9. Verfahren nach einem der Ansprüche 2 bis 8, bei welchem das Polymer P durch radikalische Polymerisation unter Kontrolle der Homogenität der Massen hergestellt wird.

10. Verfahren nach Anspruch 9, bei welchem das Polymer P mittels wenigstens eines Monomers PM in Gegenwart eines Übertragungsmittels und wenigstens eines thermischen Initiators hergestellt wird.

11. Verfahren nach Anspruch 10, bei welchem das Monomer PM aus der Familie der á-Fluor- oder á, â-Difluor-Alkyl(meth)acrylate, wobei der Ausdruck Alkyl jede wenigstens teilweise chlorierte oder fluorierte Kohlenwasserstoffgruppe bezeichnet, und aus den wenigstens teilweise fluorierten Maleimiden gewählt ist.

12. Verfahren nach Anspruch 11, bei welchem das Abscheiden der Lagen sukzessiv erfolgt.

13. Verfahren nach Anspruch 12, bei welchem zwischen jedem Abscheiden der Mischungslagen wenigstens teilweise eine Zwischenvernetzung durchgeführt wird.

14. Verfahren nach Anspruch 12, bei welchem nach dem sukzessiven Abscheiden der Lagen eine einzige Vernetzung durchgeführt wird.

15. Verfahren nach einem der Ansprüche 2 bis 14, bei welchem die Vernetzung eine Photovernetzung ist, und bei welchem der in jeder Mischung vorliegende Initiator ein Photoinitiator ist.
